# EUROPEAN PATENT APPLICATION

(11) **EP 4 706 875 A2**
(43) Date of publication of application: **11.03.2026**
(21) Application number: 25200068.2
(22) Date of filing: 04.09.2025
(51) Int. Cl.: B23P 6/00, B21B 1/22, B21B 37/00, G05D 5/00, D21G 1/00, B29C 43/24, C25D 21/12, H01M 4/04

(54) **METHOD AND DEVICE FOR IN PLACE CALENDER ROLLER DENT INSPECTION AND REPAIR**

(30) Priority: 10.09.2024 US 202418830482
(71) Applicant: Tesla, Inc., Austin, TX 78725 (US)
(72) Inventor: HAN, Sang Yun, Austin, TX, 78725 (US); KALT, Andrew Stephen, Austin, TX, 78725 (US); HILGERS, Andy Alexander, Austin, TX, 78725 (US); SAWKIN, Justin, Austin, TX, 78725 (US); HUCK, Dennis, Austin, TX, 78725 (US); HEINZ, Kathrin, Austin, TX, 78725 (US); JARDIN, André, Austin, TX, 78725 (US); DAVIDSON, Corey, Austin, TX, 78725 (US); LAUB, Alexander, Austin, TX, 78725 (US); TZANETOS, Filippos, Austin, TX, 78725 (US); FUNK, Martin, Austin, TX, 78725 (US); MIRAU, Boris, Austin, TX, 78725 (US); HUSCH, Emil, Austin, TX, 78725 (US); RAUER, Michael, Austin, TX, 78725 (US)
(74) Representative: Liesegang, Eva

(57) **Abstract**

Systems (1000) and methods for mapping and/or repairing the surface of calender roller (1004) while the calender roller is still installed in the calender roll system are described. The methods for mapping and repairing a surface of a calender roller may comprise providing a calender roll system comprising a calender roller, mapping a surface profile of the calender roller, identifying a dent area on the surface of the calender roller at least partially based on the surface profile, and depositing a material at the dent area. The systems for mapping and repairing the surface of the calender roller are also described.

## Description

### CROSS-REFERENCE TO PRIORITY APPLICATION

This application claims priority to U.S. Patent Application No. 18/830,482, entitled "METHOD AND DEVICE FOR IN PLACE CALENDER ROLLER DENT INSPECTION AND REPAIR," filed on September 10, 2024, the technical disclosure of which is hereby incorporated by reference in its entirety and for all purposes.

### BACKGROUND

### Field

The present disclosure relates generally to a calender roll system, and particularly to methods and processes for mapping and repairing a calender roller in a calender roll system.

### Description of the Related Art

Calender rollers are used to form films, such as an electrode film for an energy storage device. The material for forming the film may comprise a hard material, such as an electrode active material for a battery, and calendering such a hard material may cause imperfections (e.g., scratches, dents) to form on the surface of the calender rollers. The imperfections on the surface of the calender rollers may lead to varied film thickness or other defects across the width of the film. Previous methods to identify and repair the imperfections on the surface of the calender rollers require removing the calender rollers from the calender roll system, which is time consuming. Accordingly, there is a need for improved inspection and repair methods.

### SUMMARY

For purposes of summarizing the disclosure and the advantages achieved over the prior art, certain objects and advantages of the disclosure are described herein. Not all such objects or advantages may be achieved in any particular embodiment. Thus, for example, those skilled in the art will recognize that the invention may be embodied or carried out in a manner that achieves or optimizes one advantage or group of advantages as taught herein without necessarily achieving other objects or advantages as may be taught or suggested herein.

All of these embodiments are intended to be within the scope of the invention herein disclosed. These and other embodiments will become readily apparent to those skilled in the art from the following detailed description of the preferred embodiments having reference to the attached figures, the invention not being limited to any particular preferred embodiment(s) disclosed.

In a first aspect, a process for repairing a surface of a calender roller is disclosed. The process for repairing a surface of a calender roller comprises providing a calender roll system comprising a calender roller; mapping a surface profile of the calender roller; identifying a dent area on the surface of the calender roller at least partially based on the surface profile; and depositing a material at the dent area.

In some embodiments, the mapping the surface profile of the calender roller comprises: rotating the calender roller; measuring a first circumferential surface profile of the calender roller at a first longitudinal position; measuring a second circumferential surface profile of the calender roller at a second longitudinal position; and combining the first circumferential surface profile and the second circumferential surface profile to form the surface profile of the calender roller, wherein the first and second longitudinal positions are along a length of the calender roller.

In some embodiments, the mapping the surface profile of the calender roller comprises: measuring a first longitudinal surface profile at a first circumferential position; measuring a second measuring a first longitudinal surface profile at a second circumferential position; combining the first longitudinal surface profile and the second longitudinal surface profile to form the surface profile of the calender roller, wherein the first and second circumferential positions are along a circumference of the calender roller.

In some embodiments, the process further comprises polishing the deposited material to match the surface of the calender roller. In some embodiments, the process further comprises mapping a second surface profile of the calender roller after depositing the material. In some embodiments, the rotating the calender roller comprises rotating the calender roller at a circumferential speed in a range of 0.1 m/min to 50 m/min. In some embodiments, the combining comprises aligning the first and second circumferential surface profiles. In some embodiments, the dent area comprises a deepest point having a depth greater than about 10 µm. In some embodiments, the dent area has an area greater than about 10 mm². In some embodiments, the depositing the material comprises depositing electroplating a metal or an alloy at the dent area. In some embodiments, the depositing the material comprises contacting the dent area with a metal-containing solution. In some embodiments, the metal-containing solution comprises Co, Ni, Fe, Mn, Mg, Ti, Al, Ca, Ti, Cr, Cu, Si, V, Zn, Au, Ag, W, or combinations thereof. In some embodiments, the depositing the material comprises depositing the metal in the metal-containing solution at the dent area. In some embodiments, the process further comprises depositing a coating layer over the deposited material. In some embodiments, the coating layer comprises nickel tungsten.

In a second aspect, a system for mapping a calender roller is disclosed. The system for mapping a calender roller comprises a calender roll system comprising a calender roller, wherein the calender roller comprises a roller surface and a shaft; a surface mapping apparatus comprising a profilometer positioned on a rail parallel to the shaft of the calender roller; an attachment means configured to removably attach the surface mapping apparatus to the calender roll system; and a detecting element configured to coordinate the rotation of the calender roller and the position of the profilometer.

In some embodiments, the detecting element comprises an incremental encoder. In some embodiments, the detecting element comprises a calender roller encoder. In some embodiments, the detecting element comprises a rotation recording element and a reference positioned on the roller surface. In some embodiments, the profilometer comprises a color sensor, a step height sensor, or a combination thereof. In some embodiments, the mapping apparatus further comprises a defect locating unit. In some embodiments, the defect locating unit comprises a laser. In some embodiments, the calender roll system comprises a calendered film on the roller surface.

In a third aspect, a process for repairing and using a calender roller is disclosed. The process for repairing and using a calender roller comprises providing a calender roll system comprising a calender roller; mapping a surface profile of the calender roller; identifying a dent area on the surface of the calender roller at least partially based on the surface profile; depositing a repair material at the dent area, wherein the repair material comprises a metal; and calendering an electrode film material comprising an electrode active material to form an electrode film, wherein the electrode active material comprises the metal, wherein the metal is selected from the group consisting of Co, Ni, Fe, Mn, Mg, Ti, Al, Ca, Ti, Cr, Cu, Si, V, Zn, Au, Ag, W, and combinations thereof. In some embodiments, the metal is selected from the group consisting of Co, Ni, and combinations thereof. In some embodiments, the electrode active material is a cathode active material.

### BRIEF DESCRIPTION OF THE DRAWINGS

FIG. 1 is a perspective view of a calender roll system 100 according to some embodiments.
FIG. 2 is a schematic flowchart of a process 200 for mapping and repairing a calender roller surface according to some embodiments.
FIG. 3 is a schematic flowchart of a process 300 for mapping a calender roller surface according to some embodiments.
FIG. 4 is a schematic flowchart of a process 400 for mapping a calender roller surface according to some embodiments.
FIG. 5 is a schematic flowchart of a process 500 for mapping a calender roller surface according to some embodiments.
FIG. 6 is a schematic flowchart of a process 600 for combining a plurality of sectional surface profiles of the calender roller according to some embodiments.
FIG. 7 is a schematic flowchart of a process 700 for repairing a calender roller surface according to some embodiments.
FIG. 8 is a schematic flowchart of a process 800 for repairing a calender roller surface according to some embodiments.
FIG. 9 is a schematic flowchart of a process 900 for repairing a calender roller surface according to some embodiments.
FIG. 10A is a schematic perspective view of the system 1000 for mapping a calender roller surface according to some embodiments.
FIG. 10B is a schematic side view of the system 1000 for mapping a calender roller surface according to some embodiments.
FIG. 11 is a schematic top-down view of the relative position of the roller and the measuring unit 1102 before the mapping starts, according to some embodiments.
FIG. 12 is a schematic perspective view of a system 1200 for mapping a calender roller surface according to some embodiments.
FIG. 13 is a schematic illustration of the electroplating unit 1300 for the electroplating process according to some embodiments.
FIG. 14A is an image of a dent area on a calender roller surface according to some embodiments.
FIG. 14B is an image of a film formed using the calender roller with dents according to some embodiments.
FIG. 15 is a plot of the combined circumferential surface profiles along the length of the calender roller according to some embodiments.
FIG. 16 is the surface profile plot after combining the circumferential surface profiles in FIG. 15 according to some embodiments.
FIG. 17 is a plot of the surface profile of a calender roller according to some embodiments.
FIG. 18A is an image of a dent area on a calender roller surface according to some embodiments.
FIG. 18B is an image of the dent area after repair according to some embodiments.
FIG. 18C is the surface profile plot of the calender roller before repair according to some embodiments.
FIG. 18D is a surface profile plot of the same calender roller after repair according to some embodiments.
FIG. 19A is a surface profile plot of another calendar roller before repair according to some embodiments.
FIG. 19B is a surface profile plot of a calender roller after electroplating according to some embodiments.
FIG. 20A is a surface profile plot of another calendar roller before repaired according to some embodiments.
FIG. 20B is a surface profile plot of a calender roller after electroplating according to some embodiments.
FIG. 21A is the surface profile plot of the calender roller where the encoder is mounted on the main frame according to some embodiments.
FIG. 21B is the surface profile plot of the calender roller where the encoder is mounted on a frame detached from the main frame according to some embodiments.

### DETAILED DESCRIPTION

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

Systems and methods for mapping and/or repairing the surface of calender roller while the calender roller is still installed in a calender roll system are described. As the surface of calender roller is mapped and/or localized imperfections are repaired without being removed from the roll system, the calender roller may be repaired without time consuming and expensive methods that may require removal of the calender roller and repair of the entire or substantially entire surface. Such systems and methods may be particularly beneficial for calendering of electrode film materials (e.g., electrode active materials), which may be particularly hard and regularly cause damage to the roller surface. Such substantially defect free calender rollers may be beneficial for dry electrode film manufacturing processes, where the defects on the calender roll surface may be imparted to the dry electrode films and may cause the degradation of the electrode film performance when used in energy storage devices.

### Definitions

A "self-supporting" electrode film is an electrode film that incorporates binder matrix structures sufficient to support the film or layer and maintain its shape such that the electrode film or layer can be free-standing. When incorporated in an energy storage device, a self-supporting electrode film or active layer is one that incorporates such binder matrix structures. Generally, and depending on the methods employed, such electrode films are strong enough to be employed in energy storage device fabrication processes without any outside supporting elements, such as a current collector or other film. For example, a "self-supporting" electrode film can have sufficient strength to be rolled, handled, and unrolled within an electrode fabrication process without other supporting elements. A dry electrode film, such as a cathode electrode film or an anode electrode film, may be self-supporting.

A "solvent-free" electrode film is an electrode film that contains no detectable processing solvents, processing solvent residues, or processing solvent impurities. A dry electrode film, such as a cathode electrode film or an anode electrode film, may be solvent-free.

A "wet" electrode, "wet process" electrode, or slurry electrode, is an electrode prepared by at least one step involving a slurry of active material(s), binder(s), and optionally additive(s). A wet electrode may include processing solvents, processing solvent residues, and/or processing solvent impurities.

Generally described, one or more aspects of the present disclosure relate to systems and processes for mapping and repairing a calender roller in a calender roll system. Processes for repairing a calender roller surface comprises mapping a surface of the calender roller, identifying a surface imperfection, and depositing a material at the surface imperfection. In some embodiments, the processes further comprise mapping the calender roller surface after depositing a material at the identified surface imperfection. In some embodiments, the repairment of the calender roller surface is complete if a depth of the repaired surface imperfection is less than a threshold.

### Calender Roll System for Forming an Electrode Film

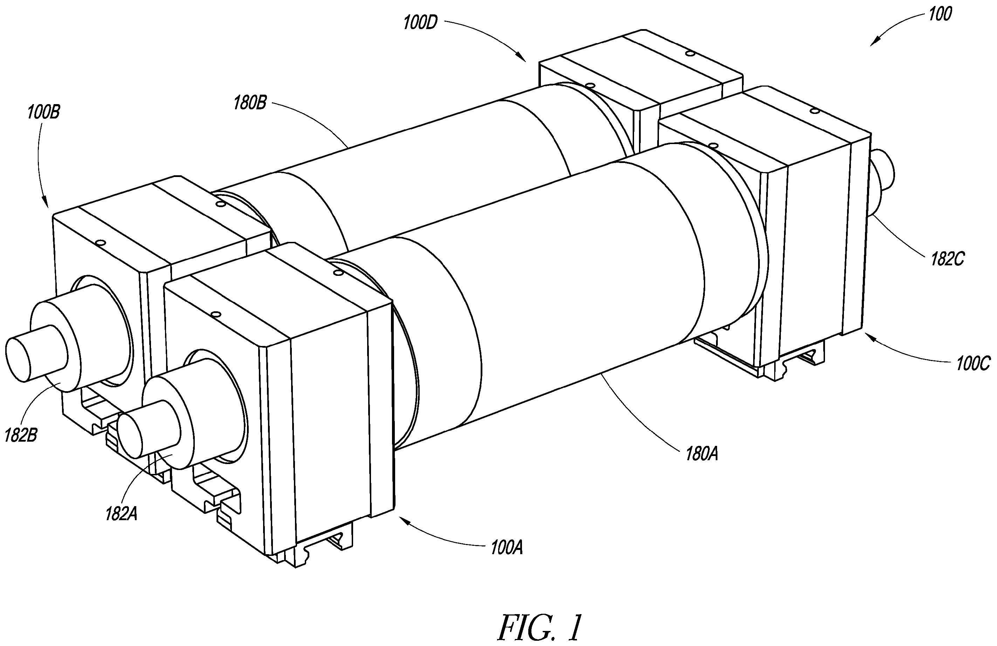

FIG. 1 is a perspective view of a calender roll system 100 including adjacent calender rollers 180A and 180B, according to some embodiments. The calender roller 180A is supported on opposite ends by a first bearing block assembly 100A and a second bearing block assembly 100C. The calender roller 180B is supported on opposite ends by a third bearing block assembly 100B and a fourth bearing block assembly 100D. The first bearing block assembly 100A supports a first journal 182A positioned at a first end of the first calender roller 180A. The second bearing block assembly 100C supports a second journal 182C positioned at a second end of the first calender roller 180A. The third bearing block assembly 100B supports a first journal 182B positioned at a first end of the second calender roller 180B. The fourth bearing block assembly 100D supports a second journal 182D positioned at a second end of the second calender roller 180B. The calender rollers 180A and 180B are positioned adjacent to each other. In some embodiments, the calender roller comprises a shaft positioned at the center of the roller, which supports and drives the roller to rotate. In some embodiments, the rollers have a length of, of about, of at least, of at least about, of at most, of at most about, 0.5 m, 1 m, 1.1 m, 1.2 m, 1.3 m, 1.4 m, 1.5 m, 1.6 m, 1.7 m, 1.8 m, 1.9 m, 2 m, 2.1 m, 2.2 m, 2.3 m, 2.4 m, 2.5 m, 3 m, 4 m, 5 m, 6 m, 7 m, 8 m, 9 m, or 10 m, or any range of values therebetween. In some embodiments, the rollers have a diameter of, of about, of at least, of at least about, of at most, of at most about, 0.1 m, 0.2 m, 0.3 m, 0.4 m, 0.5 m, 0.6 m, 0.7 m, 0.8 m, 0.9 m, 1 m, 1.1 m, 1.2 m, 1.3 m, 1.4 m, 1.5 m, 2 m, or 3 m, or any range of values therebetween. As illustrated in FIG. 1 and considering the size of the rollers, it is time consuming to remove the rollers from bearing block assemblies, repair the roller surfaces and then install the rollers back to the roll system. Thus, an in-place inspection and repairing method is necessary for the roller system. In some embodiments, an "in-place" inspection and/or repairing method refers to a method that does not or does not need to remove the calender roller from the calender roll system for the inspection and/or repairment.

### Processes for Mapping and Repairing a Calender Roller Surface

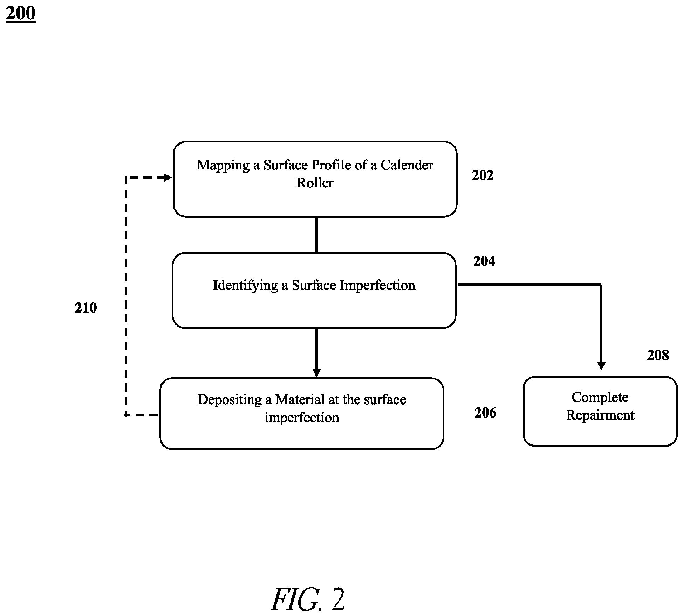

FIG. 2 schematically illustrates a process 200 for mapping and repairing a calender roller surface according to some embodiments. As illustrated in FIG. 2, the process 200 comprises mapping a surface profile of a calender roller at a step 202. The process 200 further comprises a step 204 of identifying a surface imperfection. The process 200 further comprises depositing a material at a surface imperfection at a step 206. After the material is deposited at the surface imperfection at the step 206, the calender roller surface may be mapped again by returning a step 210 to the mapping step 202. In some embodiments, additional surface imperfections may be identified at the step 204 and a material may be deposited at the surface imperfection at the step 206. In some embodiments, no more surface imperfections are identified in step 204, and the repairment is completed at a step 208.

### Processes for Mapping a Calender Roller Surface

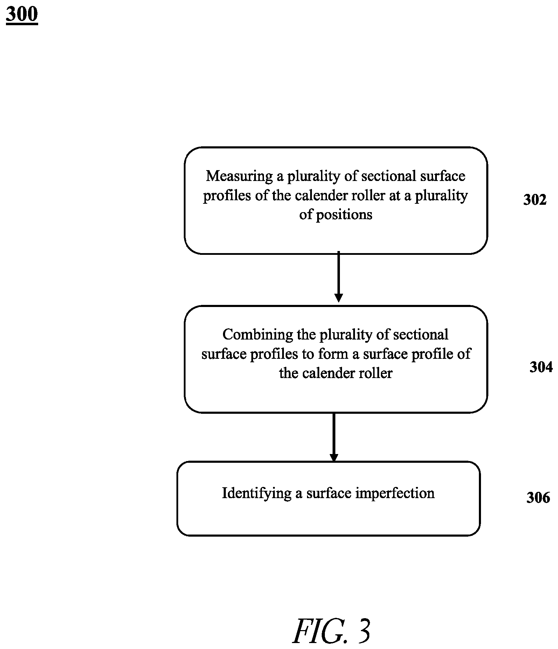

FIG. 3 schematically illustrates a process 300 for mapping a calender roller surface according to some embodiments. As illustrated in FIG. 3, the process 300 comprises measuring a plurality of sectional surface profiles of the calender roller at a plurality of positions at a step 302 and combining the plurality of sectional surface profiles to form a surface profile of the calender roller at a step 304. The process 300 further comprises identifying a surface imperfection at a step 306. In some embodiments, combining the plurality of sectional surface profiles comprises aligning the plurality of sectional surface profiles with the information of the plurality of positions. In some embodiments, the calender roller is mapped with the calendered film on the surface of the calendar roller. In some embodiments, identifying a surface imperfection comprises marking a surface imperfection.

In some embodiments, the sectional surface profiles comprise a circumferential surface profile, a longitudinal surface profile, or a combination thereof. In some embodiments, a circumferential surface profile of a calender roller at a certain position is the surface characteristics along the circumference of the roller at the corresponding position. In some embodiments, a longitudinal surface profile of a calender roller at a certain position is a surface characteristic along the length of the roller at a certain position. In some embodiments, the surface characteristics comprise surface contours, textures, variations, roughness, and combinations thereof. In some embodiments, the plurality of positions comprises a plurality of longitudinal positions along a length of the calender roller, a plurality of circumferential positions along a circumference of the calender roller, or a combination thereof.

In some embodiments, a surface imperfection includes a scratch, a dent, a crack, a pit, a corrosion, a porosity, a stain, a blister, or combinations thereof. In some embodiments, the surface imperfection is a dent. In some embodiments, the surface imperfection is identified when one or more parameters of the surface imperfections is above a threshold. In some embodiments, the parameters of the surface imperfections may comprise the average depth or height, the largest depth or height, the surface area, the volume, and combinations thereof. In some embodiments, a surface imperfection is identified when a recessed area has a largest depth of, of about, of at least, of at least about, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 25 µm, 30 µm, 40 µm, 50 µm, or 100 µm, or any range of values therebetween. In some embodiments, a surface imperfection is identified when a recessed area has an area of, of about, of at least, of at least about, 1 mm², 2 mm², 3 mm², 4 mm², 5 mm², 6 mm², 7 mm², 8 mm², 9 mm², 10 mm², 11 mm², 12 mm², 13 mm², 14 mm², 15 mm², 16 mm², 17 mm², 18 mm², 19 mm², 20 mm², 25 mm², 30 mm², 40 mm², 50 mm², or 100 mm², or any range of values therebetween. In some embodiments, a surface imperfection is identified when a recessed area has an average depth of, of about, of at least, of at least about, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 25 µm, 30 µm, 40 µm, 50 µm, or 100 µm, or any range of values therebetween. In some embodiments, a surface imperfection area is identified when a recessed area has a largest depth of more than about 10 µm and an area of more than about 10 mm². In some embodiments, the threshold for a surface imperfection is determined by the precision requirements of the thin film formed by the calender rollers.

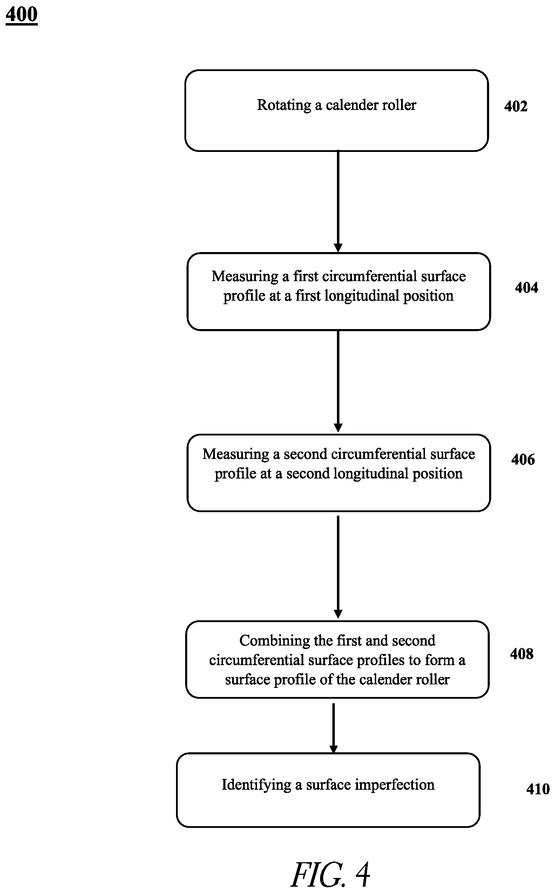

FIG. 4 schematically illustrates a process 400 for mapping a calender roller surface by measuring a plurality of circumferential surface profiles according to some embodiments. As illustrated in FIG. 4, the process 400 comprises rotating a calender roller 402. The process 400 further comprises measuring a first circumferential surface profile at a first longitudinal position at a step 404 and measuring a second circumferential surface profile at a second longitudinal position at a step 406. In some embodiments, measuring the first and/or second circumferential surface profiles comprises recording the information of the first and/or second longitudinal positions. The process 400 comprises combining the first and second circumferential surface profiles to form a surface profile of the calender roller at a step 408 and identifying a surface imperfection at a step 410. In some embodiments, combining the first and second circumferential surface profiles comprises aligning the first and second circumferential surface profiles with the recorded information of the first and second longitudinal positions.

In some embodiments, the calendar roller rotates continuously throughout the mapping process. In some embodiments, the calendar roller rotates when measuring a circumferential surface profile. In some embodiments, measuring a circumferential surface profile of the calender roller at a certain position comprises measuring the circumferential surface profile of the calender roller while the calender roller rotates for at least 1 full circle, such as 1, 2, 3, 4, 5, 10, or any number of circles therebetween. In some embodiments, the number of circles the calender roller rotates is set by needs. In some embodiments, the completion of the calender roller rotation at the first position triggers the movement of a measuring equipment to the second position. In some embodiments, the calender roller rotates at a circumferential speed of, of about, 0.1 m/min, 1 m/min, 2 m/min, 5 m/min, 10 m/min, 15 m/min, 20 m/min, 25 m/min, 30 m/min, 35 m/min, 36 m/min, 37 m/min, 38 m/min, 39 m/min, 40 m/min, 41 m/min, 42 m/min, 43 m/min, 44 m/min, 45 m/min, 46 m/min, 47 m/min, 48 m/min, 49 m/min, 50 m/min, 55 m/min, 60 m/min, 70 m/min, 80 m/min, 90 m/min, or 100 m/min, or any ranges of values therebetween.

In some embodiments, the information of the first and/or second longitudinal position comprises the relative distance of the first and/or second longitudinal position from a start position. In some embodiments, the first circumferential position and the second circumferential position are along a length of the calender roller. In some embodiments, the first circumferential position and the second circumferential position are along a line parallel to the shaft of the calender roller. In some embodiments, the first and second circumferential positions are neighboring positions. In some embodiments, the distance between two neighboring positions is not greater than the field of view of a measuring equipment. In some embodiments, the distance between the first and second circumferential positions is, is about, is at most, is at most about, is at least, is at least about, 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 25 mm, 30 mm, 40 mm, or 50 mm, or any range of values therebetween.

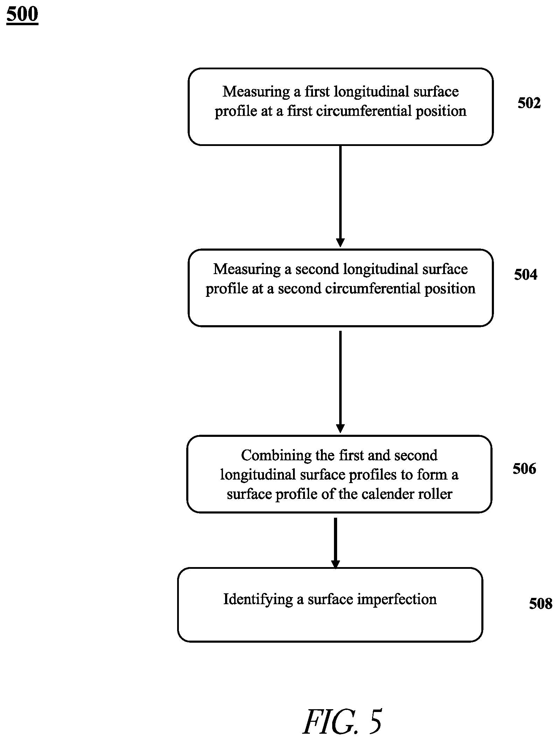

FIG. 5 schematically illustrates a process 500 for mapping a calender roller surface by measuring a plurality of longitudinal surface profiles according to some embodiments. As illustrated in FIG. 5, the process 500 comprises measuring a first longitudinal surface profile at a first circumferential position at a step 502 and measuring a second longitudinal surface profile at a second circumferential position at a step 504. In some embodiments, measuring the first and/or second longitudinal surface profiles comprises recording the information of the first and/or second circumferential positions. In some embodiments, the recorded information of the first and/or the second circumferential positions comprises the relative distance from a starting position. In some embodiments, the calender roller rotates while a measuring unit is fixed when the measurement is from a first circumferential position to a second circumferential position. In some embodiments, the calender roller does not rotate while a measuring unit moves from the first circumferential position to the second circumferential position. The process 500 further comprises combining the first and second longitudinal surface profiles to form a surface profile of the calender roller at a step 506 and identifying a surface imperfection at a step 508. In some embodiments, combining the first and second longitudinal surface profiles comprises aligning the first and second longitudinal surface profiles with the recorded information of the first and second circumferential positions.

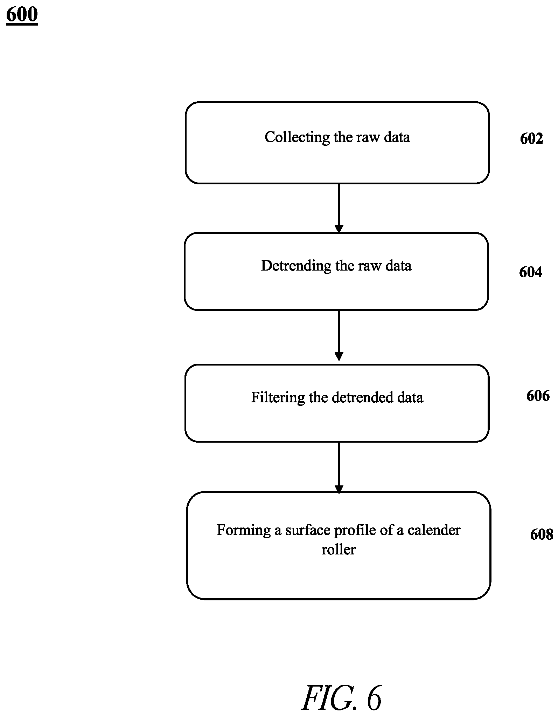

FIG. 6 schematically illustrates a process 600 for combining a plurality of sectional surface profiles of the calender roller according to some embodiments. As illustrated in FIG. 6, the process 600 comprises collecting the raw data at a step 602. In some embodiments, the raw data comprises the sectional surface profiles, the measuring position information, the rotation speed of the calender roller, or combinations thereof. The process 600 further comprises detrending the collected raw data at a step 604. In some embodiments, detrending the collected raw data comprises identifying a trend in a sectional surface profile, fitting a trend line to the sectional surface profile, and subtracting the trend line from the sectional surface profile. In some embodiments, the trend line comprises a line of best fit. In some embodiments, detrending the collected raw data further comprises correcting the errors in the combined sectional surface profiles before identifying a trend in the sectional surface profile. The process 600 further comprises a step 606 of filtering the detrended data. In some embodiments, filtering the detrended data comprises removing the data below a threshold from the sectional surface profile. In some embodiments, the threshold is, is about, is at least, is at least about, is at most, is at most about, 0.1 µm, 0.2 µm, 0.3 µm, 0.4 µm, 0.5 µm, 0.6 µm, 0.7 µm, 0.8 µm, 0.9 µm, 1 µm, 1.1 µm, 1.2 µm, 1.3 µm, 1.4 µm, 1.5 µm, 1.6 µm, 1.7 µm, 1.8 µm, 1.9 µm, 2µm, 2.1 µm, 2.2 µm, 2.3 µm, 2.4 µm, 2.5 µm, 2.6 µm, 2.7 µm, 2.8 µm, 2.9 µm, 3 µm, 4 µm, or 5 µm, or any range of values therebetween. The process 600 further forms a surface profile of a calender roller at a step 608. In some embodiments, forming the surface profile of a calender roller comprises combining the filtered data. In some embodiments, combining the filtered data comprises aligning the sectional surface profiles with the information of the positions. In some embodiments, aligning the sectional surface profiles comprises combining the circumferential surface profiles as a function of the roller circumference and the positions along the length of the calender roller. In some embodiments, aligning the sectional surface profiles comprises combining the longitudinal surface profiles as a function of the roller length and the positions along the circumference of the calender roller. In some embodiments, the surface profile is a surface roughness map as a function of the calender roller circumference and the length of the calender roller. In some embodiments, a surface imperfection area can be identified and located on the surface profile of the calender roller. In some embodiments, the surface imperfections can be identified and marked once the parameters and threshold for the surface imperfections are provided.

### Processes for Repairing a Calender Roller Surface

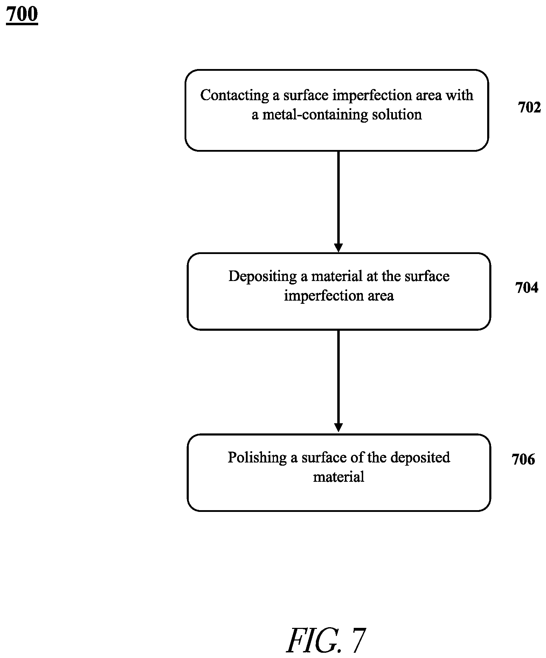

In some embodiments, after the surface imperfections are identified and marked, the surface imperfections can be repaired. In some embodiments, the repairment is carried out manually or through automated methods. FIG. 7 schematically illustrates a process 700 for repairing a calender roller surface according to some embodiments. As illustrated in FIG. 7, the process 700 comprises contacting a surface imperfection area with a metal-containing solution at a step 702, depositing a material at the surface imperfection area at a step 704 and polishing a surface of the deposited material at a step 706.

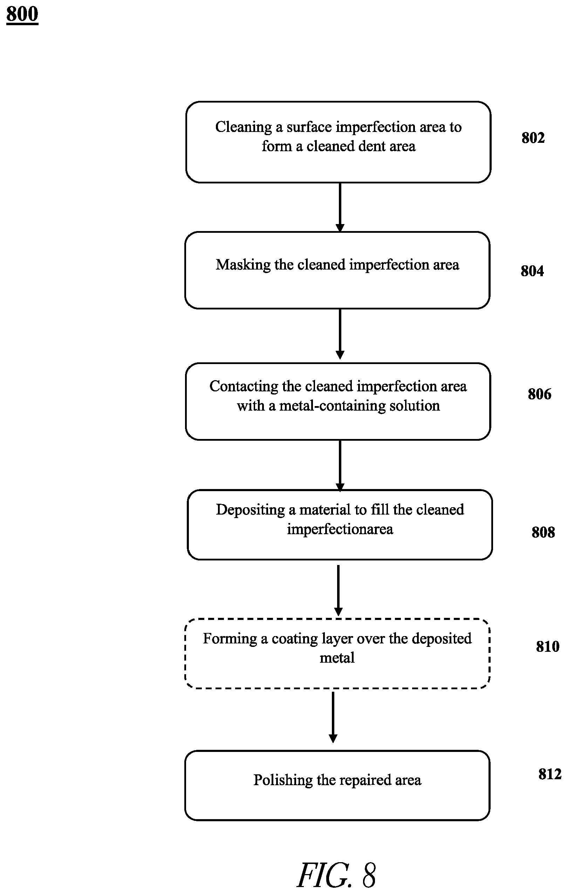

FIG. 8 schematically illustrates a detailed process 800 for repairing a calender roller surface according to some embodiments. As illustrated in FIG. 8, the process 800 comprises cleaning a surface imperfection area to form a cleaned dent area. In some embodiments, the surface imperfection area may be identified in the mapping process disclosed herein or by a different method. The process 800 further comprises masking the cleaned imperfection area at a step 804. In some embodiments, the masking comprises covering the surface of the calendar roller surrounding the imperfection area. In some embodiments, the masking comprises covering the surrounding surface with a masking tape. In some embodiments, the masking tape comprises an aluminum tape, a vinyl tape, or a combination thereof. The process 800 comprises contacting the imperfection area with a metal-containing solution at a step 806 and depositing a filler material to at least partially fill the cleaned imperfection area at a step 808. In some embodiments, an electrolyte is steadily supplied throughout the process of the electroplating. In some embodiments, the electrolyte comprises a metal organic liquid. The process 800 further comprises forming a coating layer over the deposited filler material at a step 810 and polishing the repaired area at a step 812. In some embodiments, the step 810 of forming the coating layer over the deposited filler material is optional.

In some embodiments, cleaning the imperfection area comprises electrocleaning (i.e., electrochemical cleaning or electrolytic cleaning) the imperfection area. In some embodiments, electrocleaning the imperfection area removes the oils, greases, oxides and other impurities from the imperfection area. In some embodiments, electrocleaning the imperfection area comprises using NaOH for electrocleaning. In some embodiments, cleaning the imperfection area comprises etching the imperfection area. In some embodiments, etching the imperfection area comprises physical etching, chemical etching, or a combination thereof. In some embodiments, chemical etching comprises etching with a hydrochloric acid having a concentration of, of about, of at least, of at least about, of at most, of at most about, 1wt.%, 5wt.%, 6.5 wt.%, 7 wt.%, 8wt.%, 9 wt.%, 10wt.%, 11wt.%, 12wt.%, 13wt.%, 14wt.%, or 15wt.%, or any range of values therebetween. In some embodiments, etching comprises etching the imperfection area to enlarge the imperfection area. In some embodiments, etching comprises etching the imperfection area to deepen the depth of the imperfection area. In some embodiments, etching comprises etching the imperfection area to increase the width to depth ratio of the imperfection area.

In some embodiments, the metal in the metal-containing solution comprises Co, Ni, Fe, Mn, Mg, Ti, Al, Ca, Ti, Cr, Cu, Si, V, Zn, Au, Ag, W, or combinations thereof. In some embodiments, the metal in the metal-containing solution comprises Co, Ni, Fe, Mn, Mg, Ti, Al, Ti, Cr, Cu, Si, or combinations thereof. In some embodiments, the metal in the metal containing solution comprises tungsten. In some embodiments, the metal in the metal-containing solution comprises cobalt, nickel, tungsten, chrome, copper, or combinations thereof. In some embodiments, the metal-containing solution comprises the sulphate of the metal. In some embodiments, the metal-containing solution comprises nickel sulphate, cobalt sulphate, or a combination thereof. In some embodiments, the metal in the metal-containing solution comprises the metal contained in the electrode film mixture to be calendered by the calender rollers. In some embodiments, the metal in the metal-containing solution is one or more elements contained in the active material in the electrode film mixture to be calendered by the calender rollers. In some embodiments, the metal in the active material of the electrode film mixture comprises Co, Ni, Fe, Mn, Mg, Ti, Al, Ti, Cr, Cu, Si, or combinations thereof. For example, if the calender roller is for calendering an electrode film mixture comprising a lithium nickel manganese cobalt ("NMC") film, the metal in the metal containing solution may comprise nickel, cobalt, manganese, or combinations thereof. In some embodiments, as the metal in the metal-containing solution is one or more elements contained in the active material in the electrode film mixture, even if a small amount of the deposited material exfoliates from the roller surface, the calendered film would not be affected or contaminated. In some embodiments, the metal in the metal-containing solution can enhance the properties of the deposited material, such as improving the hardness, Youngs's modulus, toughness, wear resistance, etc. In some embodiments, the metal-containing solution comprises elements help improve the adhesion of the deposited material to the roller surface, etc. In some embodiments, the elemental form of the metal in the metal-containing solution comprises young's modulus of, of about, of at least, of at least about, 100Gpa, 11 0Gpa, 120Gpa, 130Gpa, 140Gpa, 150Gpa, 160Gpa, 170Gpa, 180Gpa, 190Gpa, 200Gpa, 210Gpa, 220Gpa, 230Gpa, 240Gpa, 250Gpa, or 300Gpa, or any range of values therebetween. In some embodiments, the material deposited in the imperfection area comprises the metal in the metal-containing solution. In some embodiments, the material deposited in the imperfection area comprises a metal or an alloy. In some embodiments, the material deposited in the imperfection area comprises Co, Ni, Fe, Mn, Mg, Ti, Al, Ca, Ti, Cr, Cu, Si, V, Zn, Au, Ag, W, or combinations thereof. In some embodiments, the metal deposited in the imperfection area comprises cobalt, nickel, tungsten, or a combination thereof. In some embodiments, the deposited material comprises the metal elements contained in the electrode film mixture to be calendered by the calender rollers. In some embodiments, the deposited material comprises elements that can improve the hardness, Youngs's modulus, toughness, wear resistance, etc. In some embodiments, the deposited material comprises elements that can improve the adhesion to the roller surface.

In some embodiments, depositing the material at the imperfection area and/or forming a coating layer comprises electroplating. In some embodiments, electroplating comprises contacting the imperfection area with a pre-plating solution before contacting the imperfection area with a metal-containing solution. In some embodiments, the pre-plating solution comprises acid of the metal to be deposited, such as nickel acid or cobalt acid. In some embodiments, electroplating comprises depositing the metal in the metal-containing solution with an electric current. In some embodiments, the electroplating is performed at a temperature of, of about, of at least, of at least about, of at most, of at most about, 15°C, 20°C, 25°C, 26°C, 27°C, 28°C, 29°C, 30°C, 31°C, 32°C, 33°C, 34°C, 35°C, 36°C, 37°C, 38°C, 39°C, 40°C, 41°C, 42°C, 43°C,or 45°C, 45°C, 50°C, 55°C, or 60°C, any range of values therebetween, for example, 15°C-60°C, 15°C-50°C, 35°C-50°C, or 35°C-40°C. In some embodiments, the electroplating is performed with a current density of, of about, of at least, of at least about, of at most, of at most about, 0.5, 0.6, 0.7, 0.9, 0.9, 1, 1.1, 1.2, 1.3, 1.4, 1.5, 1.6, 1.7, 1.8, 1.9, 2, 2.1, 2.2, 2.3, 2.4, 2.5, 3, 4, or 5, any range of values therebetween. In some embodiments, a large current density in electroplating may lead to porous plated material and/or burned spots. In some embodiments, a small current density in electroplating may lead to longer plating time. In some embodiments, the electroplating is performed with a stable or substantially stable current density and/or at a stable or substantially stable temperature. In some embodiments, the electroplating comprises activating the surface of the imperfection area before supplying the power. In some embodiments, activating the surface comprises contacting the surface of the imperfection area with a sulfuric acid having a concentration of, of about, of at least, of at least about, of at most, of at most about, 1wt.%, 5wt.%, 10wt.%, 11wt.%, 12wt.%, 13wt.%, 14wt.%, 15wt.%, 16wt.%, 17wt.%, 18wt.%, 19wt.%, 20wt.%, 30wt.%, or any range of values therebetween.

In some embodiments, forming a coating layer over the deposited material comprises depositing a coating layer. In some embodiments, the forming a coating layer over the deposited metal comprises electroplating with a solution containing the material to be deposited. In some embodiments, the coating layer comprises a material harder than the material deposited at the imperfection area. In some embodiments, the coating layer comprises a material having a higher wear resistance than the deposited metal. In some embodiments, the coating layer comprises a material having a hardness of, of about, of at least, of at least about, of at most, of at most about, 45 Rc, 48 Rc, 49 Rc, 50 Rc, 51 Rc, 52 Rc, 53 Rc, 54 Rc, 55 Rc, 56 Rc, 57 Rc, 58 Rc, 59 Rc, 60 Rc, 65 Rc, or 70 Rc, or any range of values therebetween. In some embodiments, the coating layer prevents wear of the deposited metal. In some embodiments, the coating layer comprises nickel tungsten. In some embodiments, the coating layer comprises a thickness of, of about, of at least, of at least about, of at most, of at most about, 0.1 µm, 0.5 µm, 1 µm, 1.5 µm, 2 µm, 2.5 µm, 3 µm, 3.5 µm, 4 µm, 5 µm, 6 µm, 7 µm, 8 µm, 9 µm, 10 µm, 15 µm, or 20 µm, or any range of values therebetween, such as 0.1-20 µm, 0.1-10 µm, 1-10 µm, or 1-5 µm. In some embodiments, the surface of the coating layer is higher than the surface surrounding the imperfection area. In some embodiments, the surface of the coating layer is, is about, is at least, is at least about, is at most, is at most about, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, or 20 µm, or any range of values therebetween, higher than the surface of the area surrounding the imperfection area. In some embodiments, the coating layer is further polished to match the surface surrounding the imperfection area.

In some embodiments, the polishing comprises sanding the repaired area. In some embodiments, sanding comprises using a sanding belt, a sanding block, or a combination thereof. In some embodiments, the sanding block comprises a flat surface or a curved surface matching the surface of the roller surface. In some embodiments, the polishing comprises polishing with a high grit compound. In some embodiments, the high grit compound comprises, comprises about, comprises at least, comprises at least about, comprises at most, comprises at most about, 100 grits, 500 grits, 1000 grits, 1500 grits, 1600 grits, 2000 grits, 2400 grits, 2500 grits, 3000 grits, 5000 grits, or 10000, or any range of values therebetween. In some embodiments, the high grit compound comprises a size of, of about, of at least, of at least about, of at most, of at most about, 0.1 µm, 0.2 µm, 0.3 µm, 0.4 µm, 0.5 µm, 0.6 µm, 0.7 µm, 0.8 µm, 0.9 µm, 1 µm, 1.5 µm, 2 µm, 2.5 µm, 03 µm, 4 µm, 5 µm, or 10 µm, or any range of values therebetween. In some embodiments, the polishing does not change the roughness of roller surface surrounding the imperfection area which is not repaired. In some embodiments, the polished surface comprises an average roughness (Ra) of, of about, of at most, of at most about, 0.01 µm, 0.02 µm, 0.03 µm, 0.04 µm, 0.05 µm, 0.06 µm, 0.07 µm, 0.08 µm, 0.09 µm, 0.1 µm, 0.2 µm, 0.3 µm, 0.4 µm, 0.5 µm, 0.6 µm, 0.8 µm, or 1 µm, or any range of values therebetween. In some embodiments, the polished area has a shininess and roughness matching the surrounding surface. In some embodiments, the roughness of the polished surface can be a level required by manufacturing requirements in the following calendering process.

In some embodiments, the depth of the imperfection area after repairing and polishing is reduced to, to about, to less than, to less than about, 0.1 µm, 0.5 µm, 1 µm, 1.5 µm, 2 µm, 2.5 µm, 3 µm, 3.5 µm, 4 µm, 5 µm, 6 µm, 7 µm, 8 µm, 9 µm, 10 µm, 15 µm, or 20 µm, or any range of values therebetween. In some embodiments, the depth of the imperfection area after repairing and polishing is reduced to, to about, to less than, to less than about, 90%, 80%, 70%, 60%, 50%, 40%, 35%, 30%, 25%, 20%, 15%, 10%, 5%, or 0%, or any range of values therebetween, of the depth of the imperfection area before repairing. In some embodiments, the imperfection area after repairing and polishing has a surface higher than the surrounding surface.

In some embodiments, the surface area of the imperfection area after repairing and polishing is reduced to, to about, to less than, to less than about, 0.1 mm², 0.5 mm², 1 mm², 1.5 mm², 2 mm², 2.5 mm², 3 mm², 3.5 mm², 4 mm², 5 mm², 6 mm², 7 mm², 8 mm², 9 mm², 10 mm², 15 mm², 20 mm², 25 mm², 30 mm², 35 mm², 40 mm², 45 mm², or 50 mm², or any range of values therebetween. In some embodiments, the surface area of the imperfection area after repairing and polishing is reduced to, to about, to less than, to less than about, 90%, 80%, 70%, 60%, 50%, 40%, 35%, 30%, 25%, 20%, 15%, 10%, 5%, or 0%, or any range of values therebetween, of the surface area of the imperfection area before repairing.

In some embodiments, the material depositing, polishing and/or repairment is limited to the imperfection area. In some embodiments, only the identified imperfection area and the surrounding area is repaired. In some embodiments, the repaired area is, is about, is less than, is less than about, 10%, 5%, 1%, 0.1%, 0.05 %, 0.01%, 0.005%, 0.001%, or 0.0001%, or any range of values therebetween, of the surface area of calender roller.

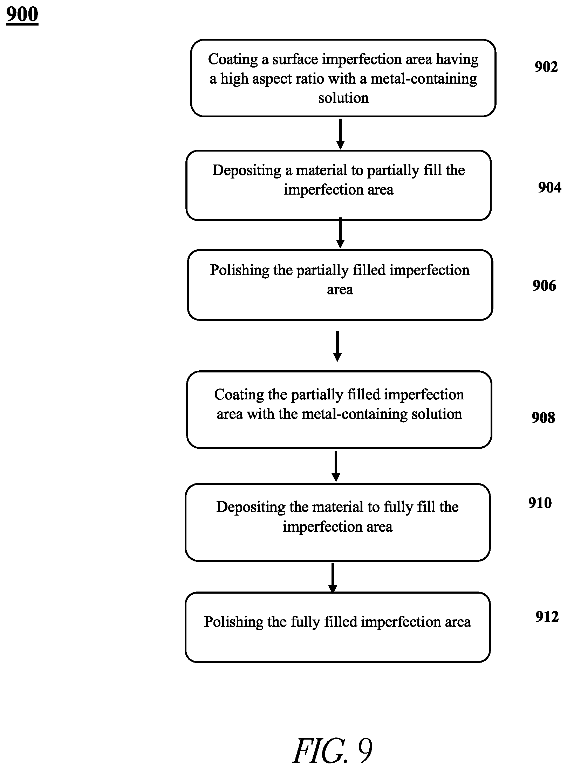

In some embodiments, the imperfection area has a depth-to-width aspect ratio of, of at most, of at most about, 1/5, 1/6, 1/7, 1/8, 1/9, or 1/10, or any range of values therebetween. In some embodiments, the imperfection area has a high depth-to-width aspect ratio such that repeated electroplating and polishing processes are helpful. In some embodiments, a high depth-to-width aspect ratio is, is about, is at least, is at least about, 1/5, 1/4, 1/3, 1/2, 1, 2, 3, 4, 5, 6, 7, 8, 9, 10, 15, or 20, or any range of values therebetween. FIG. 9 schematically illustrates a process 900 for repairing a imperfection area having a high aspect ratio according to some embodiments. As illustrated in FIG. 9, a process 900 comprises coating an imperfection area with a metal-containing solution at a step 902, depositing a material to partially fill the imperfection area at a step 904 and polishing the partially filled imperfection area at a step 906. In some embodiments, partially filling the imperfection area comprises filling, filling about, filling at least, filling at least about, filling at most, filling at most about 5%, 10%, 20%, 30%, 40%, 50%, 60%, 70%, 80%, 90%, or 95%, or any range of values therebetween of the depth of the imperfection area. In some embodiments, polishing the partially filled imperfection area comprises polishing the imperfection area to a known surface. The process 900 further comprises coating the partially filled imperfection area with the metal-containing solution 908, depositing the material to filly fill the imperfection area at a step 910 and polishing the fully filled imperfection area at a step 912. In some embodiments, the partially filling/polishing steps are repeated 2, 3, 4, 5, 6, 7, 8, 9, or 10 times, of any range of values therebetween.

### System for Mapping a Calender Roller Surface

Some embodiments of the present disclosure relate to a system for mapping a calender roller surface. In some embodiments, the system comprises a calender roll system and a surface mapping apparatus. In some embodiments, the calendar roller system comprises a calender roller comprising a roller surface and a shaft. In some embodiments, the surface mapping apparatus comprises a measuring unit positioned on a rail. In some embodiments, the system comprises a motor configured to move the measuring unit along the rail. In some embodiments, the rail is parallel to the shaft. In some embodiments, the system comprises an attachment means configured to removably attach the surface mapping apparatus to the calender roll system. In some embodiments, the surface mapping apparatus further comprises a detecting element configured to coordinate the rotation of the calender roller and the position of the measuring unit. In some embodiments, the detecting element comprises a sensor and an incremental encoder. In some embodiments, the detecting element comprises a calender roller encoder, alone, in addition to or instead of an outside encoder. In some embodiments, the calender roller encoder is an incremental encoder or absolute encoder from the calender roller.

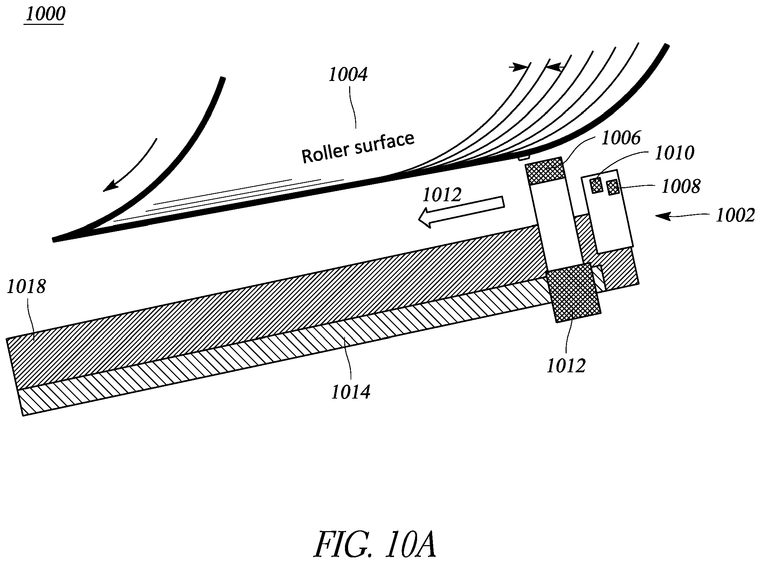

In some embodiments, the detecting element comprises a sensor and an incremental encoder. FIG. 10A is a schematic perspective view of the system 1000 for mapping a calender roller surface according to some embodiments. As illustrated in FIG. 10A, the system 1000 comprises a calender roller 1004 having a roller surface and a shaft (not shown). The system 1000 further comprises a mapping apparatus 1002. The mapping apparatus 1002 comprises a measuring unit 1006, a sensor 1008, an incremental encoder 1010, a main frame 1018, a motor 1012, and a rail 1014. The motor 1012 and the measuring unit 1006 is mounted to the main frame 1018. In some embodiments, the incremental encoder 1010 is not directly mounted on the main frame 1018. After the roller 1004 starts to rotate, the sensor 1008 detects the start of the roller rotation and the completion of one rotation. After the roller 1004 starts to rotate, the incremental encoder 1010 triggers the measuring unit 1006 measures the circumferential surface profile of the roller at the starting position. After the completion of the measurement of the circumferential surface profile of the roller at the start position, the incremental encoder 1010 triggers the movement of the motor 1012 to move along the rail 1014 by one step in the direction of 1020. In some embodiments, the completion of the rotation at a certain position is detected by the sensor 1008. The motor 1012 drives the measuring unit 1006 to move along the rail 1014 in the direction 1016 by one step and measures the circumferential surface profile of the roller at that position. The measuring unit 1006 moves to the next position to measure the circumferential surface profile of the roller at that position until the end of the rail.

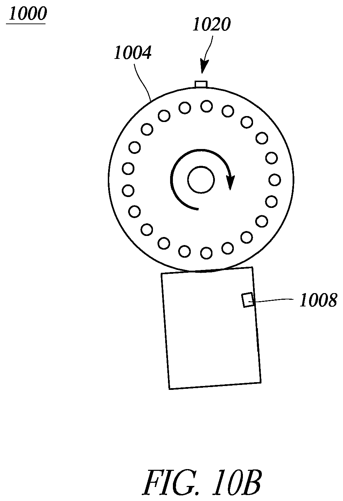

In some embodiments, the sensor 1008 may detect the completion of one rotation circle of the calendar roller by detecting a reference on the roller surface. FIG. 10B is a schematic side view of the system 1000 for mapping a calender roller surface according to some embodiments. As illustrated in FIG. 10B, a reference 1020 may be attached to the surface of the calender roller 1004. The sensor 1008 may recognize the reference 1020 and use the reference 1020 as the start and completion of one rotation circle. In some embodiments, the reference 1020 may be used as the zero reference position for aligning the circumferential surface profiles measured at different positions. In some embodiments, the sensor comprises a color sensor or a stepheight sensor. In some embodiments, the reference comprises a color different from the color of the roller surface. In some embodiments, the color of the reference is easy to be recognized by the rotation recording element. In some embodiments, the reference comprises a thickness that can be recognized by the rotation recording element.

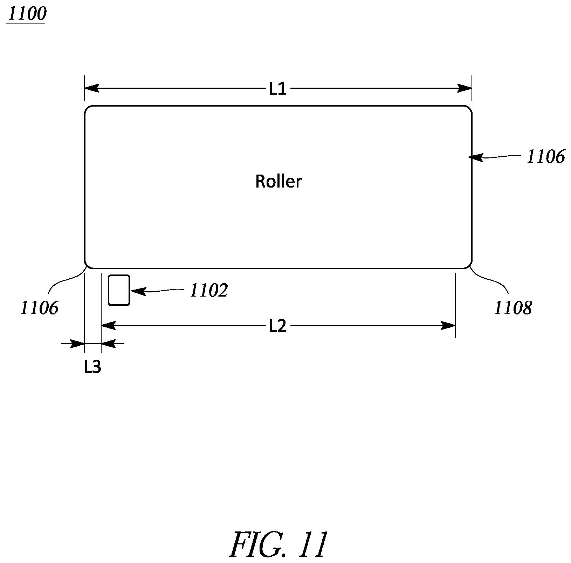

FIG. 11 is a schematic top-down view of the relative position of the roller and the measuring unit 1102 before the mapping starts, according to some embodiments. As illustrated in FIG. 11, the roller 1106 has a first edge 1104 and a second edge 1108. The start position of the measuring unit 1102 is close to the first edge 1104 of the roller 1106 with a distance of L3. The measuring range of the measuring unit 1102 is L2, which is shorter than the length of the roller L1. After the mapping starts, the roller rotates and the measuring component 1102 measures the circumferential surface profile at the starting position until the roller 1106 completes at least one rotation. The measuring unit 1102 then moves from the starting position to the second position along the length of the roller 1206 and measures the circumferential surface profile at the second position. The measuring unit 1102 then moves from the second position to the next position along the length of the roller 1206 and measures the circumferential surface profile at the next position until the measuring unit 1102 reaches the end of the measuring range L2 close to the second edge 1108.

In some embodiments, the detecting element can link the position of the measuring unit and the rotation of the calender roller without an external sensor or external encoder. In some embodiments, the detecting element comprises a calender roller encoder to detect the completion of a rotation circle. In some embodiments, after the calender roller encoder detects that the calender roller completes a rotation circle, it triggers the motor to move the measuring unit to a next position.

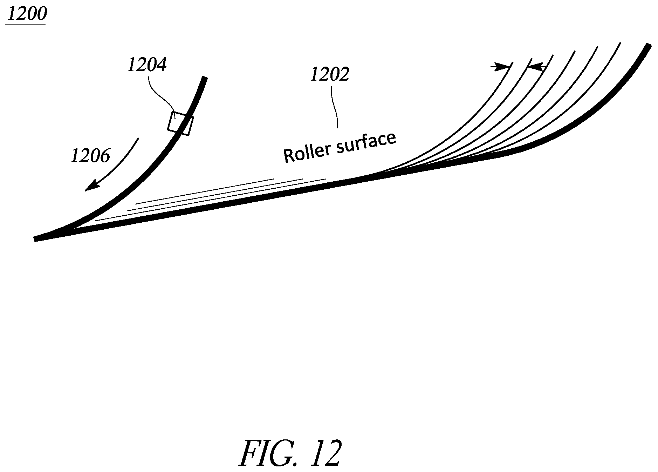

In some embodiments, a system for mapping a calender roller surface comprises a mapping apparatus to measure the longitudinal surface profile. FIG. 12 schematically illustrates a system 1200 for mapping a calender roller surface by measuring the longitudinal surface profiles according to some embodiments. As illustrated in FIG. 12, the system 1200 comprises a calender roller 1202 having a roller surface and a shaft (not shown). The system 1200 further comprises a mapping apparatus comprises a measuring unit 1204. In some embodiments, the measuring unit 1204 may rotate in the direction of 1206 while the calender roller is fixed. In some embodiments, the measuring unit is fixed while the calender roller 1202 rotates in the direction of 1206. In some embodiments, the measuring unit 1204 is configured to measure the longitudinal surface profile at a certain circumferential position.

In some embodiments, the system comprises a defect locating unit. In some embodiments, when a surface imperfection is detected and located, the defect locating unit may mark the identified imperfection for further repair. In some embodiments, the defect locating unit comprises a laser, or other appropriate marker. In some embodiments, the defect locating unit is configured to locate the surface imperfections once the parameters and threshold (e.g., average or largest depth, surface area) of the surface imperfections are provided.

In some embodiments, the measuring unit comprises a profilometer, a capacitive sensor, a digital microscope, a camera, or any other sensor that can collect surface profile data, or combinations thereof. In some embodiments, the profilometer comprises a contact profilometer or a contactless profilometer. In some embodiments, the profilometer comprises a laser profilometer. In some embodiments, the measuring unit has a certain range field of view (FOV). In some embodiments, the measuring unit comprises a field of view (FOV) of, of about, of at least, of at least about, of at most, of most about, 1 mm, 2 mm, 3 mm, 4 mm, 5 mm, 6 mm, 7 mm, 8 mm, 9 mm, 10 mm, 11 mm, 12 mm, 13 mm, 14 mm, 15 mm, 20 mm, 25 mm, 30 mm, 35 mm, 40 mm, or 50 mm, or any range of values therebetween. In some embodiments, the measuring unit comprises a resolution of, of about, of at least, of at least about, of at most, of most about, 0.01 µm, 0.05 µm, 0.1 µm, 0.15 µm, 0.2 µm, 0.25 µm, 0.3 µm, 0.35 µm, 0.4 µm, 0.5 µm, 0.6 µm, 0.7 µm, 0.8 µm, 0.9 µm, 1 µm, 1.5 µm, 2 µm, 5 µm, or 10 µm, or any range of values therebetween.

In some embodiments, the system for mapping the calender roller surface comprises 1, 2, 3, 4, 5, or 10 mapping apparatus. In some embodiments, the system comprises one mapping apparatus at the top of the calender roller and another mapping apparatus at the bottom of the calender roller.

In some embodiments, the system for mapping the calender roller surface is configured to measure the surface profile of the calendar roller with a calendered film on the roller surface.

### System for Repairing a Calender Roller Surface

Some embodiments of the present disclosure relate to a system for repairing a calender roller surface. In some embodiments, the repairing system comprises a calender roll system and a surface repairing apparatus. In some embodiments, the calendar roll system comprises a calender roller comprising a roller surface and a shaft. In some embodiments, the surface repairing apparatus comprises electroplating unit. In some embodiments, the surface repairing apparatus further comprises a polishing unit.

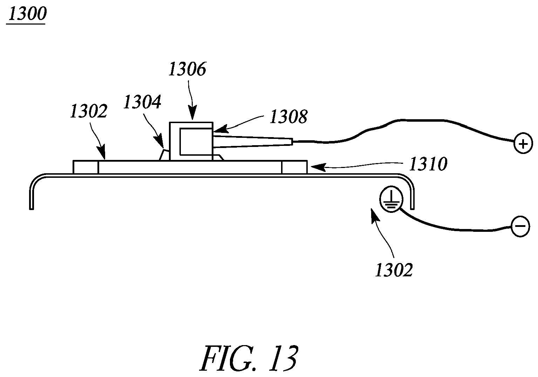

FIG. 13 is a schematic illustration of the electroplating unit 1300 for the electroplating process according to some embodiments. As illustrated in FIG. 13, the imperfection area is surrounded by a masking tape 1310 and a metal-containing solution 1304 is coated on the surface of the imperfection area before electroplating. An anode 1308 is wrapped with an anode wrap 1306 and positioned on the solution 1304. The anode 1308 is connected to a positive terminal of a power source and the calender roller surface is grounded or connected to the negative terminal of the power source. After the power source is turned on, a metal 1302 is deposited in the imperfection area from the metal-containing solution 1304. In some embodiments, as the current path between the anode and cathode is the shortest where the gap between the anode and cathode is smallest, the metal first deposits at the portion of the imperfection area having a smaller depth, such as the edge or corner of the imperfection area. In some embodiments, the electroplating comprises using brush plating. In some embodiments, the anode comprises a graphite anode or a platinum anode.

In some embodiments, the system for repairing a calender roller surface comprises an automated electroplating unit and polishing unit above the calender roller surface. In some embodiments, the automated electroplating unit and/or the polishing unit comprises a microactuator that is configured to provide microactuation. In some embodiments, the roller rotates to a next position after the surface imperfection is repaired and polished. In some embodiments, the roller rotates during the repair and polishing. In some embodiments, the electroplating solvent is provided continuously throughout the electroplating process.

### Electrode Film Mixtures, Electrode Films, and Energy Storage Devices

In some embodiments, the powders and/or films utilized in systems and methods described may be a dry electrode material/mixture. In some embodiments, the powders and/or films utilized in systems and methods described may be a wet electrode material/mixture. In some embodiments, the dry electrode material is used to form an electrode film, such as a cathode electrode film or an anode electrode film. In some embodiments, an electrode is formed from the electrode film and a current collector. In some embodiments, the electrode film includes an active material. In some embodiments, the electrode film further comprises at least one binder. In some embodiments, the electrode film comprises the active material in an amount of, of about, of at least, or at least about, 70 wt.%, 75 wt.%, 80 wt.%, 81 wt.%, 82 wt.%, 83 wt.%, 84 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 99 wt.% or 100 wt.%, or any range of values therebetween. The electrode film can be used in the formation of an energy storage device.

In some embodiments, the electrode and/or current collector comprises an adhesive layer. The dry electrode film adheres to the adhesive layer. In some embodiments, the adhesive layer comprises a carbon coating. In some embodiments, the carbon coating comprises an electrically conductive carbon coating or layer. In some embodiments, the electrode and/or current collector comprises an electrode foil and an insulator (e.g., carbon coating) disposed over all, substantially all or a portion of the current collector. In some embodiments, the current collector comprises a single adhesive layer. In some embodiments, the adhesive layer is a patterned adhesive layer. In some embodiments, the adhesive layer comprises a plurality of adhesive elements separated from one another. In some embodiments, the adhesive layer is size-on-size with an electrode film disposed over the adhesive layer. In some embodiments, the adhesive layer is larger than an electrode film disposed over the adhesive layer. In some embodiments, an adhesive layer is disposed over a current collector to form a coated current collector, and an electrode film is disposed over the coated current collector to form an electrode.

In some embodiments, an electrode film material and/or electrode film includes active cathode material. The active cathode material can form the dry electrode material (e.g., powder) discussed herein. In some embodiments, cathode active materials can comprise, for example, a metal oxide, metal sulfide, or a lithium metal oxide. The lithium metal oxide can be, for example, a lithium nickel manganese cobalt oxide (NMC), a lithium manganese oxide (LMO), a lithium iron phosphate (LFP), a lithium cobalt oxide (LCO), a lithium titanate (LTO), and/or a lithium nickel cobalt aluminum oxide (NCA). In some embodiments, cathode active materials can comprise, for example, a layered transition metal oxide (such as LiCoO₂ (LCO), Li(NiMnCo)O₂ (NMC) and/or LiNi_{0.8}Co_{0.15}Al_{0.05}O₂ (NCA)), a spinel manganese oxide (such as LiMn₂O₄ (LMO) and/or LiMn_{1.5}Ni_{0.5}O₄(LMNO)), an olivine (such as LiFePO₄), silicon, silicon oxide (SiOₓ), aluminum, tin, tin oxide (SnOx), manganese oxide (MnOx), molybdenum oxide (MoO₂), molybdenum disulfide (MoS₂), nickel oxide (NiOₓ), or copper oxide (CuOₓ). The cathode active material can comprise sulfur or a material including sulfur, such as lithium sulfide (Li₂S), or other sulfur-based materials, or a mixture thereof.

In some embodiments, the electrode film material and/or anode electrode film includes an anode active material. The anode active material can form the dry electrode material (e.g., powder) discussed herein. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, an electrode film material and/or electrode film comprises a carbon material configured to reversibly intercalate lithium ions. The carbon material can form a portion of the dry electrode material (e.g., powder) discussed herein. In some embodiments, the electrode film comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions.

In some embodiments, an electrode film material and/or electrode film includes a conductive additive. The conductive additive material can form a portion of the dry electrode material (e.g., powder) discussed herein. In some embodiments, the conductive additive may comprise a conductive carbon additive. In some embodiments, the conductive carbon additive comprises a carbon black, carbon nanotubes, such as single-walled carbon nanotubes (SWCNTs) and multi-walled carbon nanotubes (MWCNTs). In some embodiments, the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film, or any range of values therebetween. In some embodiments, the conductive additive is carbon black.

In some embodiments, the electrode film material and/or electrode film includes a binder. The binder can form a portion of the dry electrode material (e.g., powder) discussed herein. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder comprises a fibrillizable and/or fibrillized polymer. In certain embodiments, the binder comprises, consists essentially, or consists of a single fibrillizable and/or fibrillized binder, such as PTFE. In some embodiments, the binder comprises, consists essentially, or consists of PVDF. In some embodiments, the electrode film comprises a binder in an amount of, of about, of at most, or at most about, 20 wt.%, 19 wt.%, 18 wt.%, 17 wt.%, 16 wt.%, 15 wt.%, 14 wt.%, 13 wt.%, 12 wt.%, 11 wt.%, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween.

In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particles active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the resulting active layer or electrode films are self-supporting films formed using the dry process from the dry particle mixture. In some embodiments, the resulting active layer or electrode films are free-standing films formed using the dry process from the dry particle mixture. A process for forming an active layer or electrode film can include fibrillizing the fibrillizable binder component(s) such that the film comprises fibrillized binder. In further embodiments, a free-standing active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, the electrode film mixture can be calendered in a calender apparatus as disclosed herein to form a free-standing fibrillized electrode film. In some embodiments, a calendered mixture forms a free-standing dry particle film free or substantially free from any liquids, solvents, and resulting residue therefrom. In some embodiments, calendering the electrode film mixture may damage the calender roller surface, especially when the electrode film mixture comprises a hard material, such as cathode active material. In some embodiments, the electrode film is an anode electrode film. In some embodiments, the electrode film is a cathode electrode film. In some embodiments, the process for fabricating an electrode film is a dry process, where no liquids or solvents are used and the listed raw materials are dry (e.g. one or more are dry powders) such that the resulting electrode film is free or substantially free of any liquids, solvents, and resulting residues.

In some embodiments, an energy storage device comprises a separator, an anode electrode, a cathode electrode, an electrolyte, and a housing, wherein the electrolyte, separator, anode electrode and cathode electrode are disposed within the housing and the separator is positioned between the anode and cathode electrodes. In some embodiments, the cathode comprises the blended cathode active material described herein. In some embodiments, an energy storage device is formed by placing an electrolyte, a separator, an anode electrode, and the cathode electrode within a housing, wherein the separator is placed between the anode electrode and the cathode electrode. In some embodiments the energy storage device is a battery. In some embodiments the energy storage device is a lithium-ion battery. In some embodiments, the energy storage device comprises an anode electrode positioned between two cathode electrodes.

### EXAMPLES

Example embodiments of the present disclosure, including processes, materials and/or resultant products, are described in the following examples.

### Example 1 - Dents on Calender Roller Surface

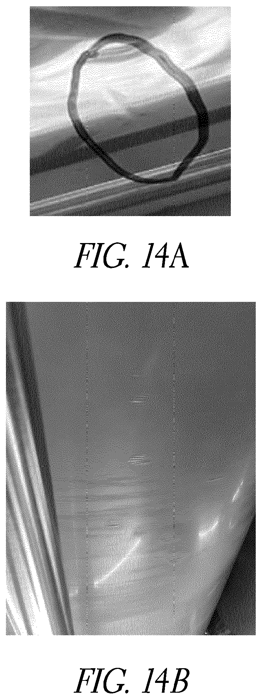

FIG. 14A is an image of a dent area on a calender roller surface. FIG. 14B is an image of a film formed using the calender roller with dents. As illustrated in FIG. 14B, the formed film has film bubbles, which reduce the quality of the film.

### Example 2 - Generating a Surface Profile of a Calender Roller

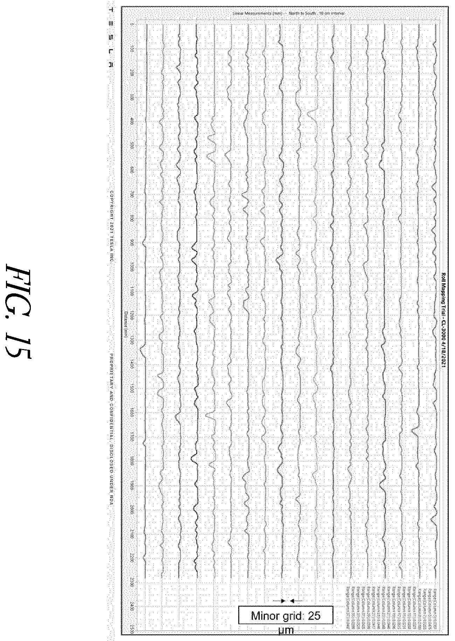

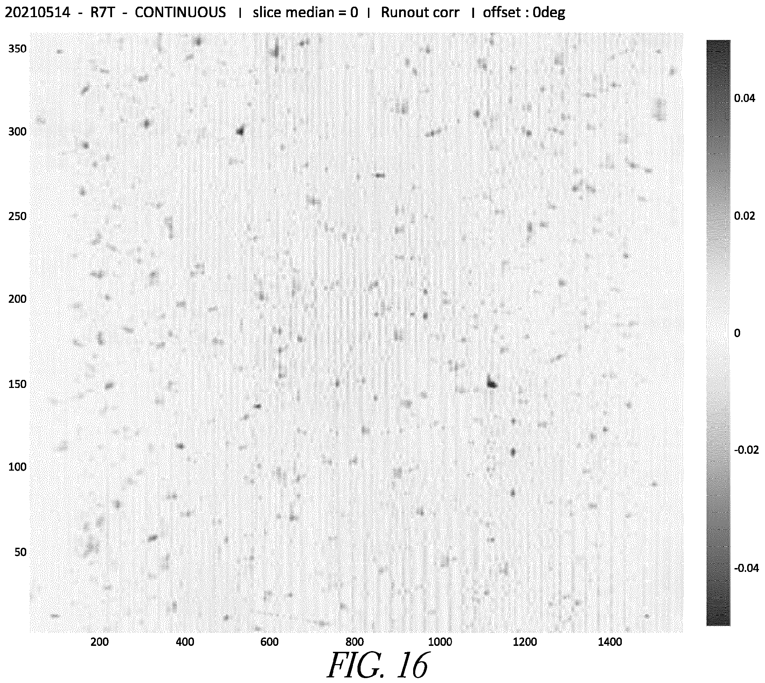

FIG. 15 is a plot of the combined circumferential surface profiles along the length of the calender roller. FIG. 16 is the surface profile plot after combining the circumferential surface profiles in FIG. 15.

### Example 3 - Repeatability Study of Generating a Surface Profile of a Calender Roller

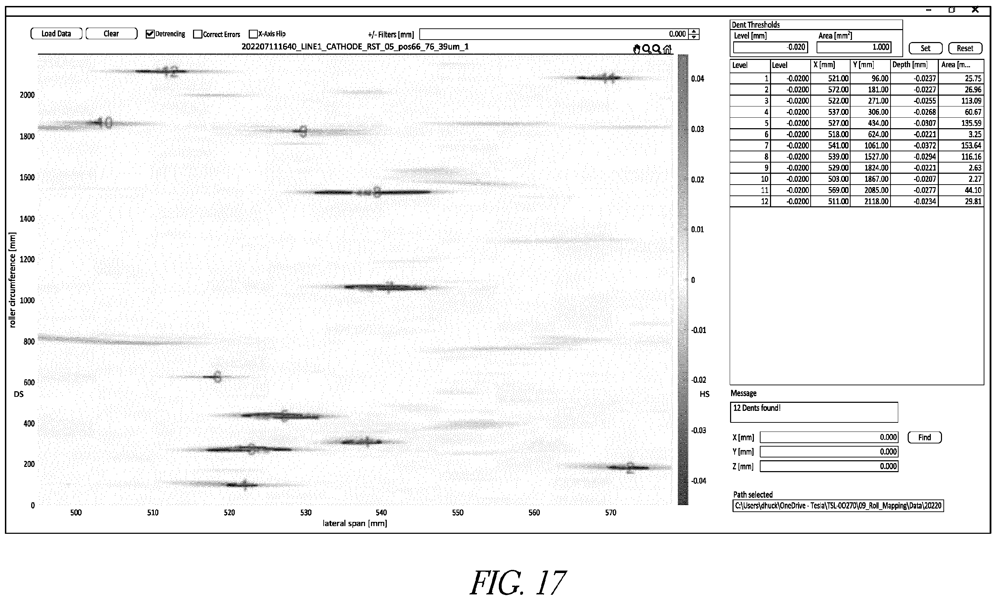

FIG. 17 is a plot of the surface profile of a calender roller combining the results of 12 measurements. As shown in FIG. 17, the process for mapping the calender roller has good repeatability. The calculated radial positional repeatability and combined repeatability are 99% from the 12 measurements

### Example 4 -Surface Profile of a Calender Roller Before and After Repair

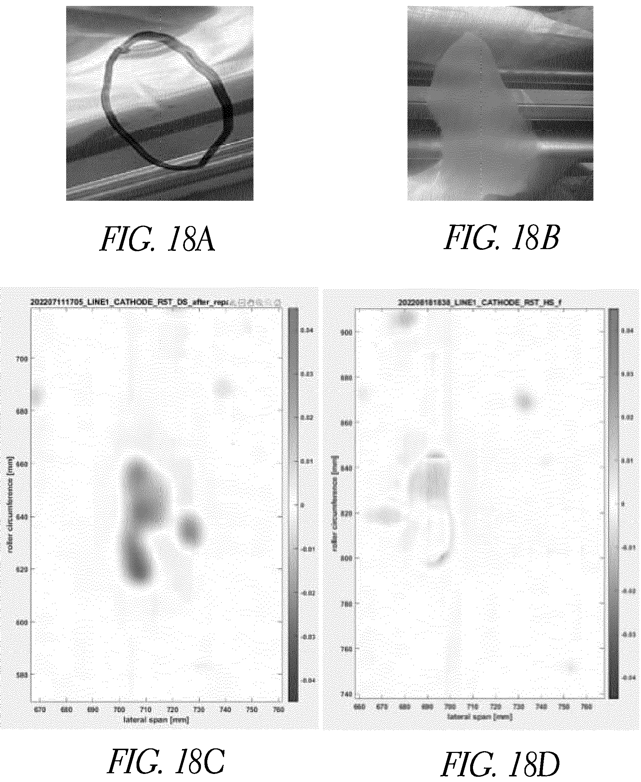

FIG. 18A is an image of a dent area on a calender roller surface. FIG. 18B is an image of the dent area in FIG. 18A after repair. As illustrated in FIG. 18B, the dent in FIG. 18A is filled and polished. FIG. 18C is the surface profile plot of the calender roller in FIG. 18A before repair. FIG. 18D is a surface profile plot of the same calender roller after repair. As illustrated in FIGS. 18C and 18D, the blue area in FIG. 18C shrinks and becomes much lighter in FIG. 18D, which demonstrates that the dent is filled and repaired.

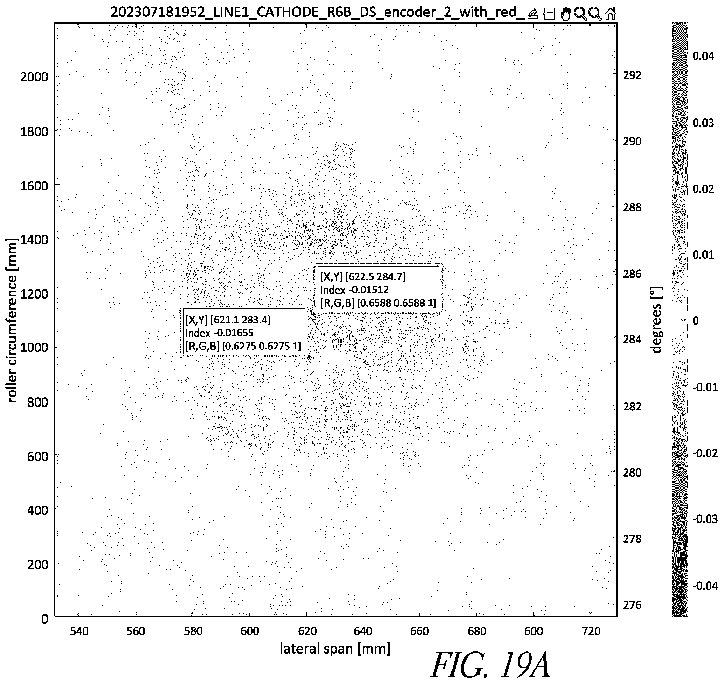

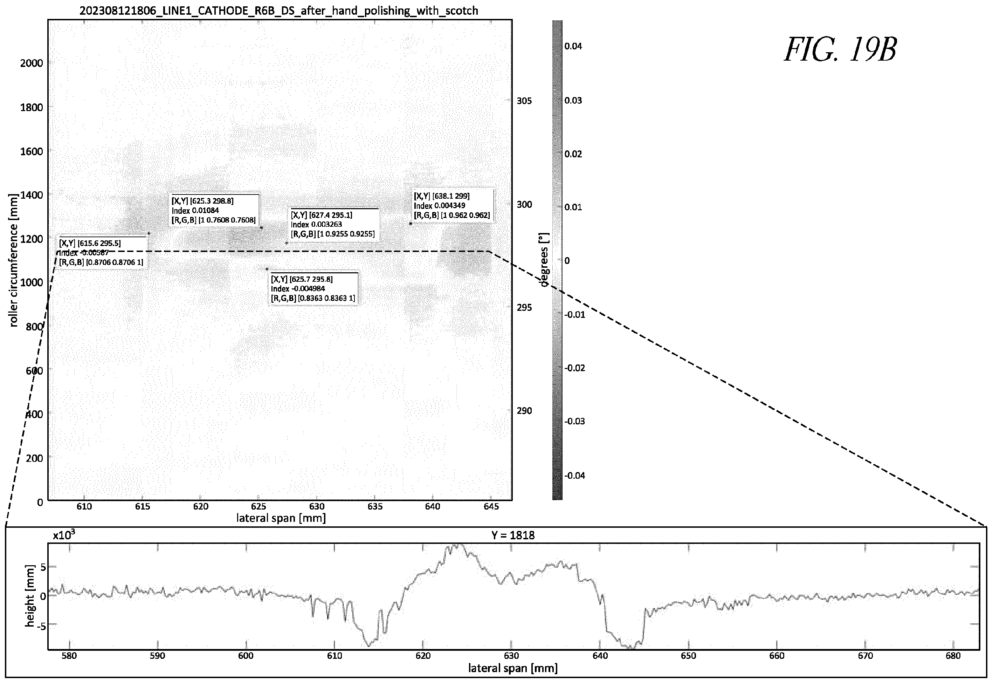

FIG. 19A is a surface profile plot of another calendar roller before repair. FIG. 19B is a surface profile plot of the same calender roller in FIG. 19A after electroplating. As illustrated in FIG. 19A, the dent area (shown in blue) has a depth of 16 µm before being repaired. After repair, as shown in FIG. 19B, the dent has a depth of 0-3 µm after electroplating. In addition, the surface surrounding the dent area is shown in red, which indicates that the surrounding surface is raised higher than the normal surface of the roller. In addition, the area surrounding the dent has a slope from a depth of about 6 µm to a height of 10 µm or 6 µm. The roughness of the electroplated surface can be corrected through polishing and/or replating.

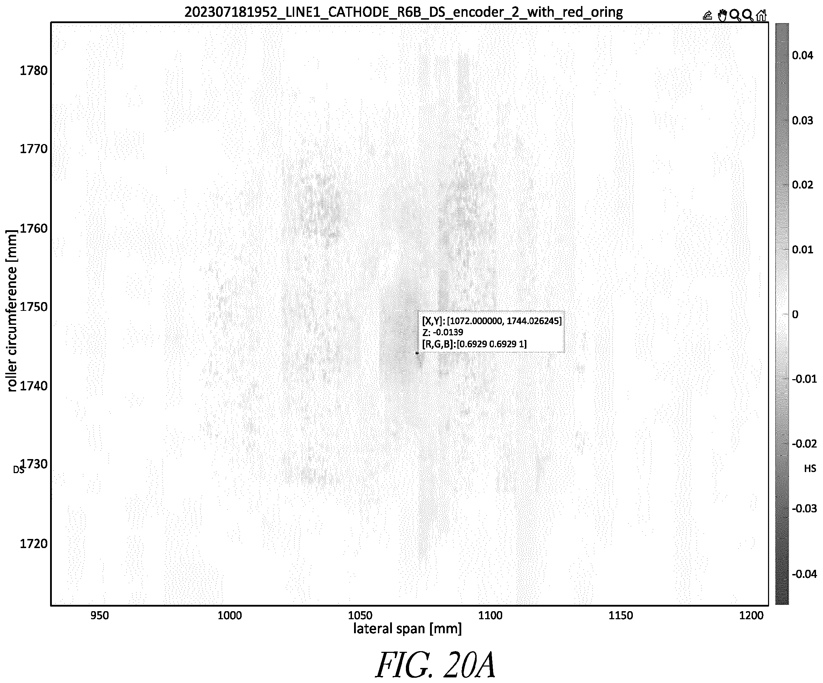

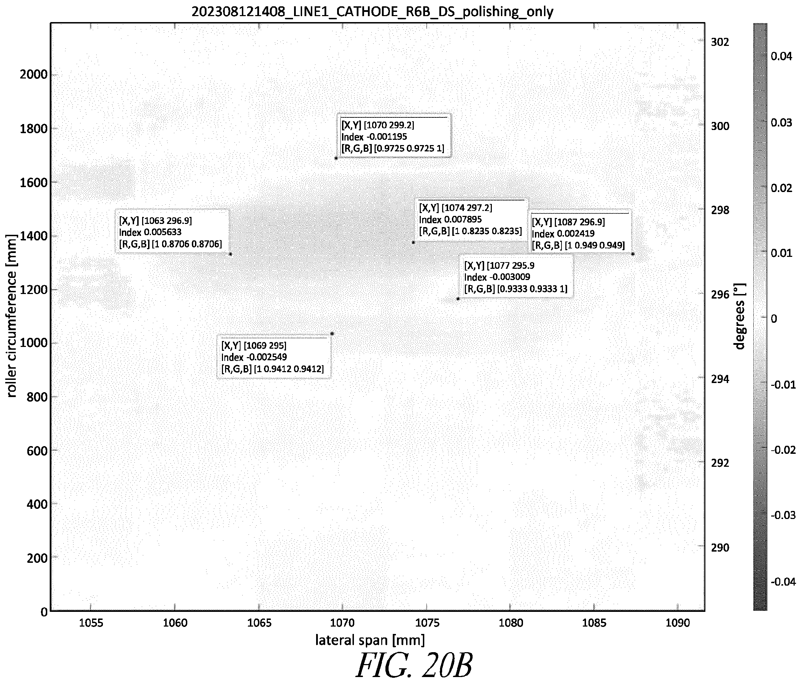

FIG. 20A is a surface profile plot of another calendar roller before repaired. FIG. 20B is a surface profile plot of the same calender roller in FIG. 20A after electroplating. As illustrated in FIG. 20A, the dent area (shown in blue) has a depth of 13.9 µm before being repair. After repair, as shown in FIG. 20B, the dent has a depth of 3 µm after electroplating. In addition, the surface surrounding the dent area is shown in red, which indicates that the surrounding surface is raised higher than the normal surface of the roller and having a height of less than about 7 µm over the normal surface. The roughness of the electroplated surface can be corrected through polishing and/or replating.

### Example 5 -Study of Polishing the Repaired Calender Roller Surface

The sample surface was repaired with electroplating a nickel tungsten for 5 µm on the sample surface. Sanding and polishing were performed for 25 minutes. Table 1 summarizes the sanding and polishing steps and Table 2 summarizes the roughness at each step. As illustrated in Table 2, the average roughness (Ra) and total height of the roughness profile (Rt) are greatly reduced and matching the original roughens before electroplating.

**Table 1**

| | **Step 1** | **Step 2** | **Step 3** |
|---|---|---|---|
| Sanding Steps | 500 grit (5-6 minutes) | 1600 grit (5-6 minutes) | 3000 grit (5-6 minutes) |
| Polishing Steps | 2 µm (3.5 minutes) | 0.5 µm (3.5 minutes) | 0.1 µM (1 min) |

**Table 2**

| | Ra (µm) | | Rt (µm) | |
|---|---|---|---|---|
| | Ra_1 (inside) | Ra_2 (Boundary) | Rt_1 (inside) | Rt_2 (boundary) |
| Before electroplating (roller surface) | 0.056 | 0.052 | 0.965 | 1.512 |
| After electroplating | 1.136 | 1.603 | 3.454 | 4.203 |
| After Sanding | 0.072 | 0.069 | 1.740* | 3.208* |
| After Polishing | 0.051 | 0.054 | 1.342 | 1.456 |

### Example 6 -Study of the Location of the Encoder

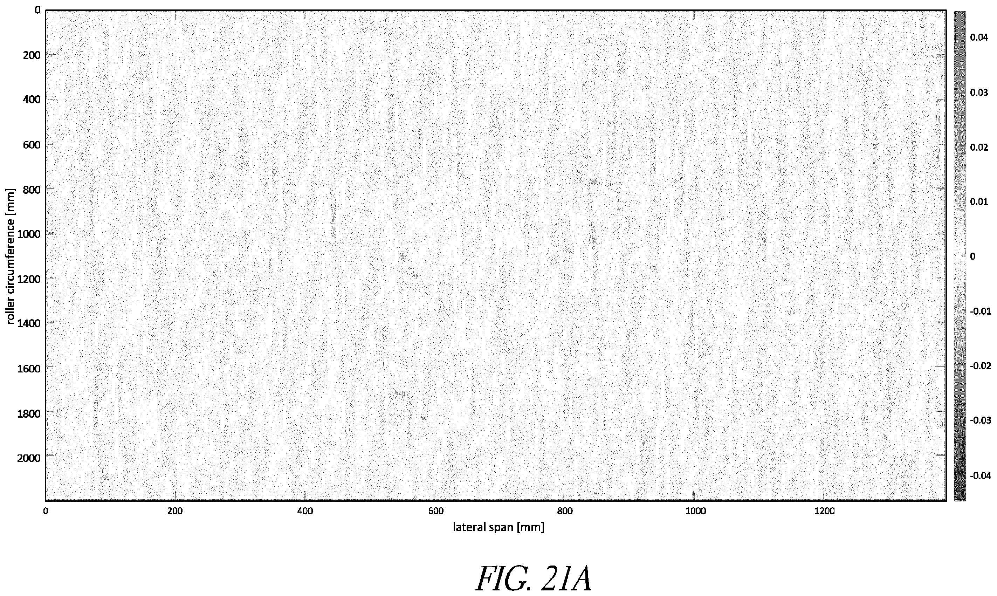

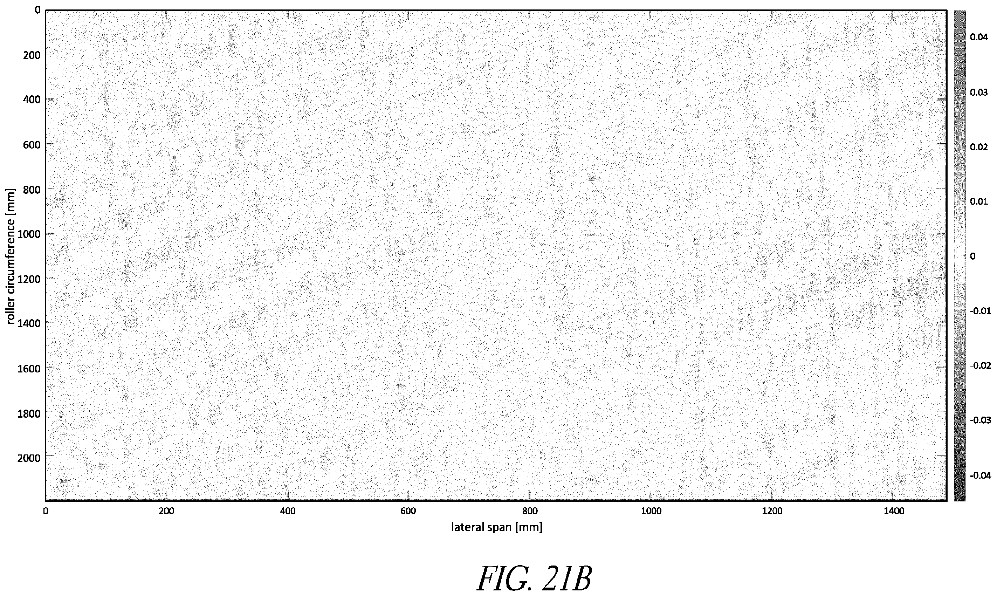

FIG. 21A is the surface profile plot of the calender roller where the encoder is mounted on the main frame. FIG. 21B is the surface profile plot of the calender roller where the encoder is mounted on a frame detached from the main frame. As illustrated in FIGS. 21A and 21B, the diagonal artifacts in FIG. 21A disappears in FIG. 21B.

While certain embodiments of the inventions have been described, these embodiments have been presented by way of example only, and are not intended to limit the scope of the disclosure. Indeed, the novel methods and systems described herein may be embodied in a variety of other forms. Furthermore, various omissions, substitutions and changes in the systems and methods described herein may be made without departing from the spirit of the disclosure. The accompanying claims and their equivalents are intended to cover such forms or modifications as would fall within the scope and spirit of the disclosure. Accordingly, the scope of the present inventions is defined only by reference to the appended claims.

Features, materials, characteristics, or groups described in conjunction with a particular aspect, embodiment, or example are to be understood to be applicable to any other aspect, embodiment or example described in this section or elsewhere in this specification unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The protection is not restricted to the details of any foregoing embodiments. The protection extends to any novel one, or any novel combination, of the features disclosed in this specification (including any accompanying claims, abstract and drawings), or to any novel one, or any novel combination, of the steps of any method or process so disclosed.

Furthermore, certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a claimed combination can, in some cases, be excised from the combination, and the combination may be claimed as a subcombination or variation of a subcombination.

Moreover, while operations may be depicted in the drawings or described in the specification in a particular order, such operations need not be performed in the particular order shown or in sequential order, or that all operations be performed, to achieve desirable results. Other operations that are not depicted or described can be incorporated in the example methods and processes. For example, one or more additional operations can be performed before, after, simultaneously, or between any of the described operations. Further, the operations may be rearranged or reordered in other implementations. Those skilled in the art will appreciate that in some embodiments, the actual steps taken in the processes illustrated and/or disclosed may differ from those shown in the figures. Depending on the embodiment, certain of the steps described above may be removed, others may be added. Furthermore, the features and attributes of the specific embodiments disclosed above may be combined in different ways to form additional embodiments, all of which fall within the scope of the present disclosure. Also, the separation of various system components in the implementations described above should not be understood as requiring such separation in all implementations, and it should be understood that the described components and systems can generally be integrated together in a single product or packaged into multiple products. For example, any of the components for an energy storage system described herein can be provided separately, or integrated together (e.g., packaged together, or attached together) to form an energy storage system.

For purposes of this disclosure, certain aspects, advantages, and novel features are described herein. Not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

For purpose of this disclosure, in some embodiments, primary particles may be smallest distinct entities from which larger structures, clusters, or aggregates are formed. Conditional language, such as "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than 10% of, within less than 5% of, within less than 1% of, within less than 0.1% of, and within less than 0.01% of the stated amount, depending on the desired function or desired result.

The scope of the present disclosure is not intended to be limited by the specific disclosures of preferred embodiments in this section or elsewhere in this specification, and may be defined by claims as presented in this section or elsewhere in this specification or as presented in the future. The language of the claims is to be interpreted broadly based on the language employed in the claims and not limited to the examples described in the present specification or during the prosecution of the application, which examples are to be construed as non-exclusive.

## Claims

1. A process for repairing a surface of a calender roller, the process comprising:
providing a calender roll system comprising a calender roller;
mapping a surface profile of the calender roller;
identifying a dent area on the surface of the calender roller at least partially based on the surface profile; and
depositing a material at the dent area.

2. The process of Claim 1, wherein the mapping the surface profile of the calender roller comprises:
rotating the calender roller;
measuring a first circumferential surface profile of the calender roller at a first longitudinal position;
measuring a second circumferential surface profile of the calender roller at a second longitudinal position; and
combining the first circumferential surface profile and the second circumferential surface profile to form the surface profile of the calender roller,
wherein the first and second longitudinal positions are along a length of the calender roller.

3. The process of Claim 2, wherein the rotating the calender roller comprises rotating the calender roller at a circumferential speed in a range of 0.1 m/min to 50 m/min; and/or wherein the combining comprises aligning the first and second circumferential surface profiles.

4. The process of Claim 1, wherein the mapping the surface profile of the calender roller comprises:
measuring a first longitudinal surface profile at a first circumferential position;
measuring a second measuring a first longitudinal surface profile at a second circumferential position;
combining the first longitudinal surface profile and the second longitudinal surface profile to form the surface profile of the calender roller,
wherein the first and second circumferential positions are along a circumference of the calender roller.

5. The process of one of the preceding claims, further comprising polishing the deposited material to match the surface of the calender roller, and/or further comprising mapping a second surface profile of the calender roller after depositing the material.

6. The process of one of the preceding claims, wherein the dent area comprises a deepest point having a depth greater than about 10 µm, and/or wherein the dent area has an area greater than about 10 mm².

7. The process of one of the preceding claims, wherein the depositing the material comprises depositing electroplating a metal or an alloy at the dent area.

8. The process of one of the preceding claims, wherein the depositing the material comprises contacting the dent area with a metal-containing solution.

9. The process of Claim 8, wherein the metal-containing solution comprises Co, Ni, Fe, Mn, Mg, Ti, Al, Ca, Ti, Cr, Cu, Si, V, Zn, Au, Ag, W, or combinations thereof, and/or wherein the depositing the material comprises depositing the metal in the metal-containing solution at the dent area.

10. The process of one of the preceding claims, further comprising depositing a coating layer over the deposited material, preferably wherein the coating layer comprises nickel tungsten.

11. A system for mapping a calender roller, the system comprising:
a calender roll system comprising a calender roller, wherein the calender roller comprises a roller surface and a shaft;
a surface mapping apparatus comprising a profilometer positioned on a rail parallel to the shaft of the calender roller;
an attachment means configured to removably attach the surface mapping apparatus to the calender roll system; and
a detecting element configured to coordinate the rotation of the calender roller and the position of the profilometer.

12. The system of Claim 11, wherein the detecting element comprises an incremental encoder, and/or wherein the detecting element comprises a calender roller encoder, and/or wherein the detecting element comprises a rotation recording element and a reference positioned on the roller surface.

13. The system of Claim 11 or 12, wherein the profilometer comprises a color sensor, a step height sensor, or a combination thereof, and/or wherein the mapping apparatus further comprises a defect locating unit, preferably wherein the defect locating unit comprises a laser, and/or wherein the calender roll system comprises a calendered film on the roller surface.

14. A process for repairing and using a calender roller, the process comprising:
providing a calender roll system comprising a calender roller;
mapping a surface profile of the calender roller;
identifying a dent area on the surface of the calender roller at least partially based on the surface profile;
depositing a repair material at the dent area, wherein the repair material comprises a metal; and
calendering an electrode film material comprising an electrode active material to form an electrode film, wherein the electrode active material comprises the metal,
wherein the metal is selected from the group consisting of Co, Ni, Fe, Mn, Mg, Ti, Al, Ca, Ti, Cr, Cu, Si, V, Zn, Au, Ag, W, and combinations thereof.

15. The process of Claim 14, wherein the metal is selected from the group consisting of Co, Ni, and combinations thereof; and/or wherein the electrode active material is a cathode active material.
